# EUROPÄISCHE PATENTANMELDUNG

(11) **EP 0 598 996 A1**
(43) Veröffentlichungstag der Anmeldung: **01.06.1994**
(21) Anmeldenummer: 93114250.9
(22) Anmeldetag: 06.09.1993
(51) Int. Cl.: H01M 10/10

(54) **Bleiakkumulator mit einem thixotropen Gel als Elektrolyt**

(30) Priorität: 13.11.1992 DE 4238353
(71) Anmelder: VARTA Batterie Aktiengesellschaft, D-30419 Hannover (DE)
(72) Erfinder: Glasner, Franz-Josef, D-65520 Bad Camberg (DE)
(74) Vertreter: Kaiser, Dieter Ralf, Dipl.-Ing.

(57) **Zusammenfassung**

Ein neuer, durch pyrogenes Siliciumdioxid immobilisierter Schwefelsäureelektrolyt weist eine vergleichsweise sehr geringe SiO₂-Konzentration zwischen 2 und 4Gew.% auf, enthält dafür aber zusätzlich in geringer Menge ein nichtionisches Tensid, insbesondere einen Alkylphenolpolyglycolether. Ohne diesen Zusatz besitzt der Elektrolyt eine nur äußerst schwache Gelierfähigkeit und eignet sich daher besonders als Füllsäure zum direkten Befüllen eines Gel-Akkumulators. Das Tensid, welches die verdickende Wirkung der pyrogenen Kieselsäure verstärkt, kann nachträglich in den bereits in Betrieb genommenen Akkumulator eingebracht werden und führt die Verfestigung des Elektrolyten herbei.

## Beschreibung

Die Erfindung betrifft einen Bleiakkumulator mit einem Schwefelsäure und pyrogene Kieselsäure enthaltenden thixotropen Gelelektrolyten sowie ein Verfahren zu seiner Herstellung.

In der Technik der Bleiakkumulatoren ist es bekannt, den Elektrolyten durch Zusatz von Substanzen einzudicken, um diese Akkumulatoren kippsicher zu machen. Als eindickende Substanzen werden feinverteilte Kieselsäure, feinverteilte Asbeste, Polyelektrolyte und dergleichen verwendet.

Unter Polyelektrolyten versteht man polymere organische Polysäuren, Polybasen oder Polyampholyte mit ionogenen Gruppen, beispielsweise einer oder mehreren Säure-oder Aminogruppen. Dabei kommen sowohl native Polyelektrolyte, z.B. Alginate und Pektinate als auch synthetische Polyelektrolyte wie Polyacrylate, Polystyrolsulfonate und Carboxymethylcellulose als Verdicker in Betracht.

Das vorzugsweise eingesetzte Mittel zur Festlegung der Schwefelsäure in Bleiakkumulatoren ist hochdisperses, auf pyrogenem Wege hergestelltes Siliciumdioxid, welches zur Bildung eines thixotropen Gels befähigt ist. Ein mit einem solchen Elektrolytgel gefüllter Bleiakkumulator ist z.B. in der CH-PS 391807 beschrieben.

Durch Einrühren von Siliciumdioxidpulver in verdünnte Schwefelsäure wird zunächst ein Elektrolytsol erhalten und dieses in den bereits mit den Elektrodenplatten und Separatoren beschickten Akkumulatorenbehälter eingefüllt. Im Zuge der anschließenden Aufladung erfolgt die Umwandlung des Sols zum Gel. Dabei ist festgestellt worden, daß die gelbildenden Teilchen bereits sehr früh so weit assoziiert sind, daß sie nicht mehr in die Poren der aktiven Massen einzudringen vermögen, so daß diese mit freibeweglichem gelfreien Elektrolyt gefüllt sind, während sich das feste Gel auf den Raum außerhalb der Elektroden erstreckt.

Da sich in einer Schwefelsäure hoher Dichte die Sol-Gel-Umwandllung so rasch vollzieht, daß eine erschöpfende Füllung aller Elektrodenporen nicht immer gewährleistet ist, bietet sich für die Bereitstellung eines gelbildnerhaltigen Füllelektrolyten eher eine verdünnte Schwefelsäure mit entsprechend längerer Topfzeit an. In diesem Falle führt eine Direktbefüllung jedoch nicht zu einem unmittelbar entladbaren Akkumulator.

Um dennoch einen betriebsbereiten Akkumulator herzustellen, der mit trockenen, geladenen Elektroden ausgerüstet ist und sofort entladen werden kann, wurde gemäß EP-PS 224529 bereits ein Füllverfahren in zwei Schritten vorgeschlagen, derart, daß in einem ersten Schritt nur die eingebauten Elektrodenplatten und Separatoren mit einer hochkonzentrierten, gelbildnerfreien Schwefelsäure getränkt werden und in einem zweiten Schritt der noch freie Elektrolytraum mit einem thixotropen Gel aus verdünnter Schwefelsäure und einem pyrogenen Kieselsäurezusatz aufgefüllt wird. Infolge des anschließenden Konzentrationsausgleichs kommt es zur Verfestigung des Gels.

Hinsichtlich einer wünschenswerten Direktfüllung mit thixotropem Gel stellt sich nun das Problem, daß die anzuwendende Kieselsäurekonzentration, die bei den üblichen Füllsäuren etwa 6% beträgt, heraufgesetzt werden müßte, um dem Gel bei einer Elektrolytdichte von ca. 1,28g/cm³ im geladenen Akkumulator noch eine ausreichende Festigkeit zu verleihen, während andererseits eine Mehrbelastung der Schwefelsäure mit Siliciumdioxid die Kapazität und das Hochstromverhalten mindert. Beides wird zusätzlich durch Schrumpfen des Gels und Rißbildung beeinträchtigt, weil sich der Innenwiderstand erhöht und die Transportvorgänge behindert werden.

Hinzukommt, daß insbesondere Kieselsäuregele mit steigender Konzentration an Kolloid eine zunehmende Synaerese, d.h. Entquellung unter Abscheidung einer Flüssigkeit aus der Gallerte bei Alterung, zeigen. Die bei der Ladung freigesetzte synaeretische Flüssigkeit muß abgesaugt werden, um die Bildung von Säurenebeln zu verhindern.

Der Erfindung liegt somit die Aufgabe zugrunde, einen Bleiakkumulator mit einem thixotropen Gel als Elektrolyt verfügbar zu machen, welches auch ohne einen verstärkten Einsatz an Kieselsäure frei ist von den Mängeln einer Desolvatation und Entmischung mit deren nachteiligen Folgen für das elektrische Verhalten und welches Elektrolytgel gegebenfalls für eine Direktbefüllung verwendet werden kann.

Die Aufgabe wird erfindungsgemäß durch einen Bleiakkumulator gelöst, wie er durch Patentanspruch 1 definiert ist.

Es wurde gefunden, daß ein Bleiakkumulator nach dem eingangs formulierten Gattungsbegriff der gestellten Aufgabe in überraschender Weise gerecht wird, wenn dem Gelelektrolyten ein wasserlösliches nichtionisches Tensid beigemischt ist, welches die verdickende WIrkung der Kieselsäure verstärkt.

Nichtionische Tenside werden im wesentlichen von den Gruppen der Fettalkoholpolyglycolether, der Alkylphenolpolyglycolether, der Fettsäurepolyglycolether, der Fettsäureamidpolyglycolether und der Fettaminpolyglycolether gebildet.

Diesen Verbindungen liegt als hydrophobe Komponente meist ein längerer Alkyl-oder Alkylarylrest zugrunde, während sie ihre Hydrophilität der Polyethergruppierung -(OCH₂CH₂-)ₙ-OH verdanken, deren Wasserlöslichkeit auf der Fähigkeit der Ethersauerstoffatome beruht, mit Wasser über eine Wasserstoffbrücke eine lose Bindung einzugehen: 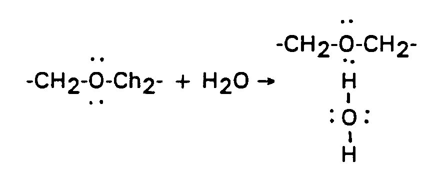
Als besonders günstig haben sich erfindungsgemäß nichtionische Tenside aus der Reihe der Alkylphenolpolyglycolether erwiesen. Die Alkylphenolpolyglycolether (auch Alkylphenolethoxylate) sind durch Addition von Ethylenoxid an Alkylphenol (Ethoxylierung) zugänglich: 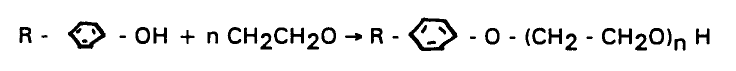
Als Produkte der Chemische Werke Hüls AG, 4370 Marl 1, sind sie im Handel unter der Bezeichnung Marlophen erhältlich.

Erfindungsgemäß sollte die Länge des Alkylrestes 6 bis 12 C-Atome betragen.

Durch den Zusatz des Alkylphenolpolyglycolethers werden Kapazität und Hochstromverhalten des Akkumulators verbessert, die Ladesynaerese unterdrückt, der Wasserverlust reduziert und damit die Lebensdauer verlängert.

Die günstige Kieselsäurekonzentration in dem neuen Gelelktrolyten, dem beispielsweise eine Schwefelsäure der Dichte d = 1,28g/cm³ zugrundeliegt, beträgt nur 2 bis 4%. Die Kieselsäure kann sowohl als festes pyrogenes Siliciumdioxidpulver in die Säure eingerührt oder dieser in Form eines Kieselsols beigemischt werden.

Der Tensid-Zusatz sollte erfindungsgemäß zwischen 0,025% und 0,1 %, vorzugsweise bei ca. 0,05% liegen.

Der bevorzugte Alkylphenolpolyglycolether wird zwecksmäßig in Form einer 1%igen wässrigen Dispersion zugesetzt.

Erfindungsgemäß ist der neue Gelelektrolyt im frisch hergestellten Zustand auch zum direkten Befüllen des Akkumulators, d.h. als Füllsäure, geeignet. Die Füllsäure gemäß der Erfindung ist somit im Rahmen vieler an sich bekannter Verfahren zur Herstellung von Gelbatterien mit Vorteil verwendbar. Dabei gibt es für die Durchführung der eigentlichen Elektrolytbefüllung verschiedene Möglichkeiten. Diese hängen vor allem davon ab, ob der zu füllende Akkumulator bereits formierte, d.h. trockene, geladene Platten oder noch unformierte Platten aus dem Curing-Prozeß enthält.

Im erstgenannten Fall wird durch die direkte Befüllung mit einem erfindungsgemäßen Elektrolyten, dessen Dichte etwa 1,28g/cm³ -entsprechend einer normalen Betriebssäuredichte- beträgt, ein sofort entladbarer Akkumulator erhalten.

Sind die bereits eingebauten Elektroden jedoch nicht formiert, sollte die Füllsäure zweckmäßig eine geringere Dichte, etwa 1,22 bis 1,24g/cm³, aufweisen, da sich die gewünschte höhere Dichte nach dem Füllen durch den nunmehr erfolgenden Ladeprozeß einstellt.

Bei anderen Füllverfahren werden in einem ersten Schritt mit einer gelbildnerfreien Schwefelsäure nur die Poren der Aktivmassen und der Separatoren gefüllt. Man erreicht dadurch eine größere Unabhängigkeit von der Topfzeit der gelbildnerhaltigen Füllsäure, mit welcher man anschließend das verbliebene freie Volumen der Akkumulatorenzelle auffüllt.

Erfindungsgemäß läßt sich jedoch das gleiche Ergebnis auch ohne den zeitaufwendigen gesonderten Arbeitsschritt der Porenfüllung mit zusatzfreier Schwefelsäure erzielen, indem man nämlich eine Füllsäure mit dem erfindungsgemäß geringen Kieselsäuregehalt von 2 - 4% verwendet, die aber frei von einem Tensid-Zusatz ist. Die geringe Gelierfähigkeit dieser Füllsäure gibt die Gewähr für eine weitestgehende Füllung der Aktivmassen- und Separatorenporen und erlaubt so die vorteilhafte Direktbefüllung des Akkumulators in einem Zuge.

Der erfindungsgemäß vorgesehene Tensid-Zusatz wird erst nach Inbetriebnahme des Akkumulators dem Elektrolyten beigemischt. Die nachträgliche Zugabe löst dann die Verfestigung des Elektrolyten aus.

Zusammengefaßt macht es die Erfindung möglich, die verdickende Wirkung von hochdispersem, pyrogenen Siliciumdioxid in schwefelsauren Gelelektrolyten von Bleiakkumulatoren zu verstärken, indem man dem thixotropen Gel eine geringe Menge eines nichtionischen Tensids beimischt. Dabei erlaubt der Tensidzusatz eine Einsparung an Siliciumdioxid von etwa 50% gegenüber der in Gelelektrolyten üblicherweise vorhandenen Menge.

Die Anwesenheit des nichtionischen Tensids gewährleistet eine einwandfreie, gleichmäßige Sol-Gel-Umwandlung nach dem Einfüllen des Elektrolyten selbst bei niegriger Säuredichte, die ohne das Tensid einen hohen Kieselsäureeinsatz von mehr als 6% erforderlich machen würde.

Dank der Reduzierbarkeit der Kieselsäurekonzentration im Elektrolyten durch den Tensid-Zusatz werden das Kapazitäts- und Hochstromverhalten der Elektrodenplatten verbessert.

Das nichtionische Tensid stabilisiert durch sein Wasserbindungsvermögen das Elektrolytgel und verhindert dessen vorzeitige Alterung. Sein Dispergiervermögen sowie seine solubilisierende Wirkung sind ebenfalls von günstigem EInfluß. Möglicherweise tragen auch synergistische Effekte im Zusammenspiel mit der Kieselsäure zur Verbesserung des sauren Elektrolytgels bei.

## Patentansprüche

1. Bleiakkumulator mit einem Schwefelsäure und pyrogene Kieselsäure enthaltenden thixotropen Gelelektrolyten, dadurch gekennzeichnet, daß der Elektrolyt zur Verstärkung der verdickenden Wirkung der Kieselsäure zusätzlich ein wasserlösliches nichtionisches Tensid aufweist.

2. Bleiakkumulator nach Anspruch 1, dadurch gekennzeichnet, daß das nichtionische Tensid ein Alkylphenolpolyglycolether ist.

3. Bleiakkumulator nach Anspruch 2, dadurch gekennzeichnet, daß der Alkylrest 6 bis 12 C-Atome umfaßt.

4. Bleiakkumulator nach einem der Ansprüche 1 bis 3, dadurch gekennzeichnet, daß die Kieselsäurekonzentration zwischen 2 und 4Gew.% und die Konzentration des nichtionischen Tensids 0,025 bis 0,1 Gew. % beträgt.

5. Bleiakkumulator nach einem der Ansprüche 1 bis 4, dadurch gekennzeichnet, daß die Konzentration des nichtionischen Tensids 0,05Gew.% beträgt.

6. Verfahren zur Herstellung eines Bleiakkumulators nach einem der Ansprüche 1 bis 5, dadurch gekennzeichnet, daß zum Befüllen des Akkumulators, welcher mit trockenen, geladenen oder ungeladenen Platten beschickt ist, ein nur die Kieselsäurekomponente enthaltender Schwefelsäureelektrolyt verwendet wird und daß das Tensid erst nach Inbetriebnahme des Akkumulators in den Elektrolyten eingebracht wird.
